# EUROPEAN PATENT APPLICATION

(11) **EP 1 920 879 A1**
(43) Date of publication of application: **14.05.2008**
(21) Application number: 07120445.7
(22) Date of filing: 12.11.2007
(51) Int. Cl.: B23Q 1/66, B23Q 39/02

(54) **Machine tool**

(30) Priority: 13.11.2006 EP 06425775
(71) Applicant: IEMCA Giuliani Macchine Italia S.p.A., 48018 Faenza (Ravenna) (IT)
(72) Inventor: Cusumano, Dario, 48018 Faenza (Ravenna) (IT); Landi, Enrico, 40122 Bologna (IT)
(74) Representative: Lanzoni, Luciano

(57) **Abstract**

Described is a machine tool comprising two machining units (2,3), each comprising a respective operating module (4,5) and a tool holder spindle (6,7).
The two spindles move independently from each other and are positioned on opposite sides of a turntable where the work pieces are located.

## Description

This invention relates to a machine tool and, in particular, to a machining centre for mechanical processes.

Machining centres are machine tools equipped with one or more spindles designed to perform machining operations by stock removal on workpieces that are removably fixed to a clamping tool.

Machining centres are known which are equipped with a single spindle having a horizontal axis of rotation and two pallets, each pallet mounting a plurality of workpieces fixed to respective clamps. These pallets alternately occupy an internal, working position and an external loading/unloading position where the workpieces that have already been machined are removed from the clamps and new workpieces are loaded.

To increase the productivity of machining centres with only one spindle, also known as single-spindle centres, machining centres with two spindles, also known as twin-spindle centres, have been built.

Twin-spindle machining centres are not free of disadvantages, however, and are susceptible of improvement especially to increase their functionality and ease of use.

In particular, for the purchase of a twin-spindle machining centre to be advantageous under equal conditions of productivity, its cost must be less than the cost of two single-spindle machining centres.

In view of this, twin-spindle machining centres have been built where the two spindles are mounted parallel with each other and with a fixed centre distance. The spindles are also rigidly connected in their movement in the direction parallel to their axes of rotation.

That is because independent movement of the two spindles would create considerable difficulties in positioning the two workpieces since the synchronized movement of the two tools means that the workpieces would have to be at exactly the same distances from the tools, this condition being very difficult to achieve, especially in processes that require a particular high degree of precision and tight tolerances.

As a result, in prior art twin-spindle machining centres, the pallet tables are not mounted in cantilever fashion and their architecture makes changing the pallet a highly complex task and, in some cases, even makes the use of pallets impossible or inadvisable, which means that the part holding equipment must be fitted directly to the table, resulting in time-consuming procedures for changing machined workpieces with unmachined ones.

This invention therefore has for an aim to provide a machining centre that permits higher levels of productivity to be achieved compared to prior art single-spindle and twin-spindle machining centres.

The technical characteristics of the invention, with reference to the above aim, are clearly described in the claims below and its advantages are apparent from the detailed description which follows, with reference to the accompanying drawings which illustrate a preferred embodiment of the invention purely by way of example without restricting the scope of the inventive concept, and in which:
- Figure 1 is a schematic front elevation view of a preferred embodiment of a machining centre according to this invention;
- Figure 2 is a schematic top plan view of the machining centre of Figure 1;
- Figure 3 is a schematic side elevation view of the machining centre illustrated in the drawings listed above;
- Figure 4 is a schematic elevation view of another embodiment of a detail of the machining centre illustrated in the drawings listed above;
- Figure 5 is a schematic top plan view of the machining centre of Figure 2 in another operating configuration.

With reference to the accompanying drawings, the numeral 1 denotes in its entirety the machine tool or machining centre according to this invention. In this specification the terms "machine tool" and "machining centre" are used synonymously and interchangeably.

The machine tool 1 comprises two machining units, labelled 2 and 3.

Each machining unit 2, 3, comprises a respective operating module 4, 5 and a tool holder spindle 6, 7.

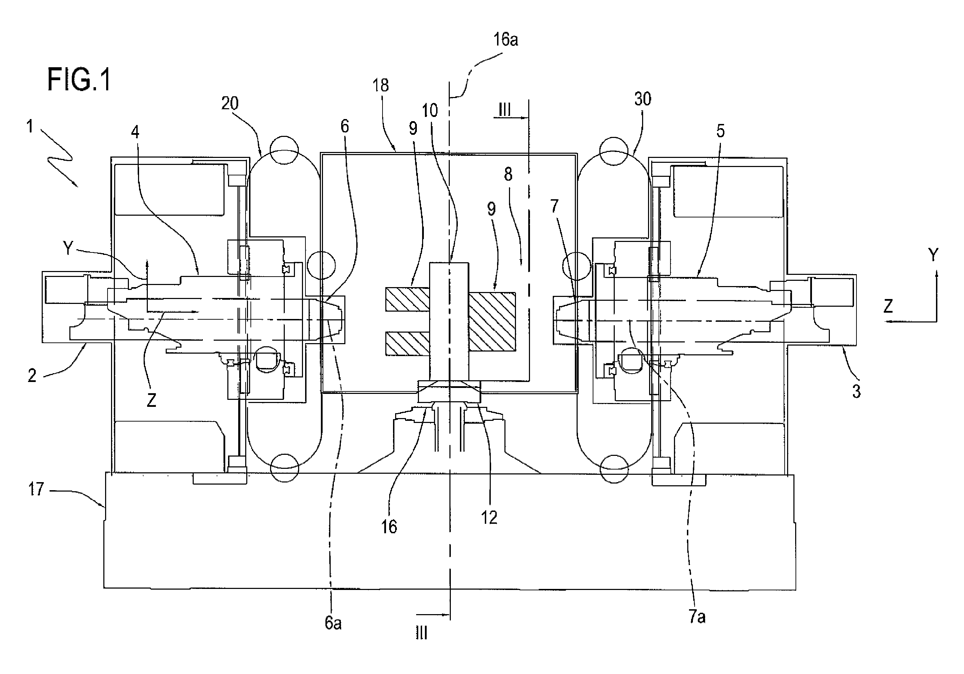

With reference to Figure 1, each of the two machining units 2, 3 is provided with an automatic tool changing device 20, 30 comprising a separate magazine 20a, 30a for storing and feeding the tools. Each device 20, 30 also comprises an element 20b, 30b for picking up and transferring the tools from the magazine 20a, 30a to the respective spindle 2, 3.

The devices 20, 30 and tool magazines 20a, 30a are of substantially known type, customarily used in other types of machine tools, and are not therefore described in detail here.

Each operating module 4, 5 is mobile along three numerically controlled, independent axes X, Y, Z at right angles to each other.

In the example embodiment schematically illustrated in the accompanying drawings, for each spindle 6, 7 the horizontal transversal axis is denoted X, the vertical axis is denoted Y and the horizontal axis of spindle movement parallel to the respective axis of symmetry or axis of rotation 6a, 7a is denoted Z.

As shown in the accompanying drawings, the two spindles 6, 7 are mounted opposite each other and their respective axes of rotation 6a, 7a are normally parallel to each other but, under certain conditions of the two modules 4, 5, may also adopt coaxial configurations.

In other words, under certain working conditions, the rotation axes 6a, 7a of the two spindles may coincide.

Between the two spindles 6 and 7, the machine tool 1 has a machining area 8 where the spindles 6, 7, with their respective tools (not illustrated), perform predetermined machining operations on the workpieces 9.

The workpieces 9 are removably fitted to suitable tooling columns 10, 11, designed to rest on respective pallets 12, by means of dedicated equipment of known type and therefore not illustrated. The main purpose of the pallets 12, which are of standard type, is to facilitate the movement of the columns 10, 11 to and from the machine tool 1.

Thus, the term "tooling column" is used to mean an element which extends at least partly vertically and which is adapted to be positioned on a respective pallet for mounting a plurality of workpieces 9 to be machined.

The tooling columns 10, 11 illustrated in the accompanying drawings purely by way of example and without limiting the scope of the invention, have only two vertical faces for positioning and mounting the workpieces 9; similarly, in another machine 1 embodiment that is not illustrated, the tooling columns might have 4 or more faces for mounting the workpieces 9.

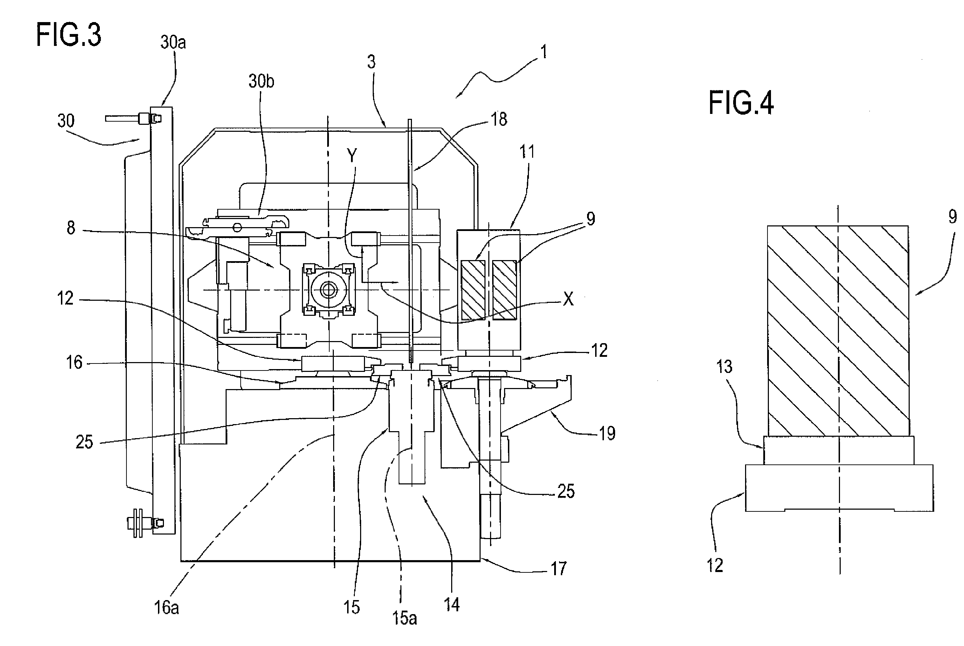

For special processes, for example on large size workpieces 9 such as those illustrated by way of example in Figure 4, the tooling column is in practice substituted by fastening equipment 13 for anchoring the workpiece directly to the pallet 12.

As shown in the accompanying drawings, there is a pallet mounting and changing unit 14 inside the machining area 8.

The pallet mounting and changing unit 14 comprises a central rotary column 15, an internal turntable 16 for mounting a pallet 12 and an external bed 17 for supporting a pallet 12. The adjectives "internal" and "external" applied to the turntable 16 and to the bed 17 are used with reference to the machining area 8.

A mobile panel 18 separates the machining area 8 from a station 19 for loading and unloading the pallets 12 onto and from the machine tool 1.

The pallet mounting and changing unit 14 constitutes means for transferring the workpieces 9 from the turntable 16, in the machining area 8, to the loading/unloading station 19 and, vice versa, from the station 19 to the turntable 16. The central rotary column 15 comprises pallet 12 pickup means 25 for gripping a pallet 12 and transferring it from the turntable 16 to the station 19 and vice versa.

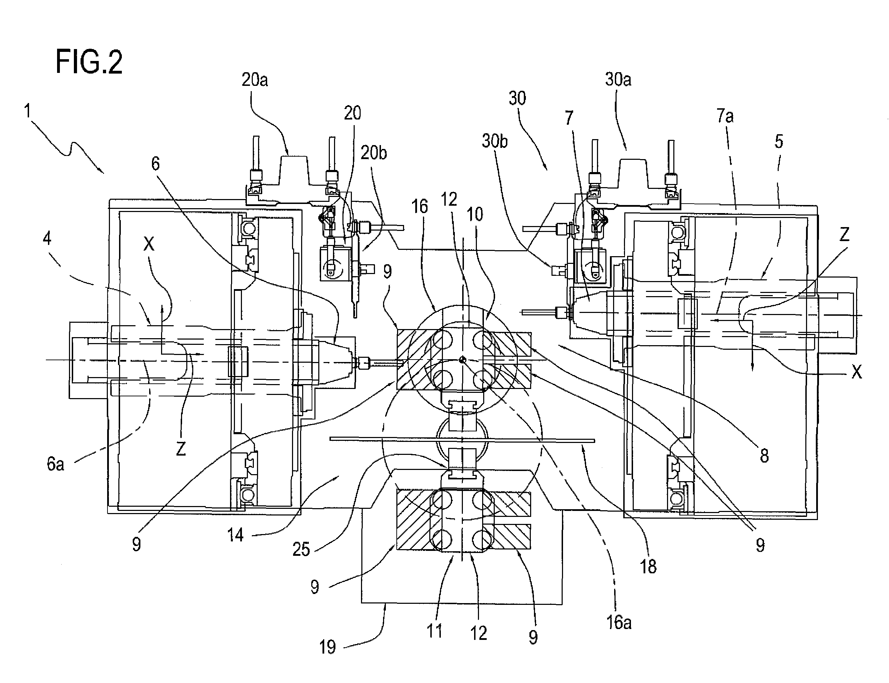

As illustrated in Figures 2 and 3, the pallet 12 located inside the machining area 8 of the machine 1 is positioned on the respective turntable 16 which turns about its vertical axis 16a in such a way as to cause the different sides of a workpiece 9 to face the spindle or spindles so that they can be machined by the tools on the spindles.

In other possible variant embodiments of the machine tool 1 according to the invention, the station 19 for loading/unloading the pallets 12 is made in one of the following ways: in the form of a pallet 12 mounting and referencing unit; in the form of a pallet mounting and referencing unit with hydraulic tooling column feed; in the form of an external line for moving, feeding and controlling two or more pallets 12, even if the pallets are different.

In other embodiments that are not illustrated, the loading/unloading station 19 comprises means for cleaning the workpieces 9 which may be either manual or automatic.

Cleaning means can be used because the loading/unloading station 19 is separated from the machining area 8 by the panel 18.

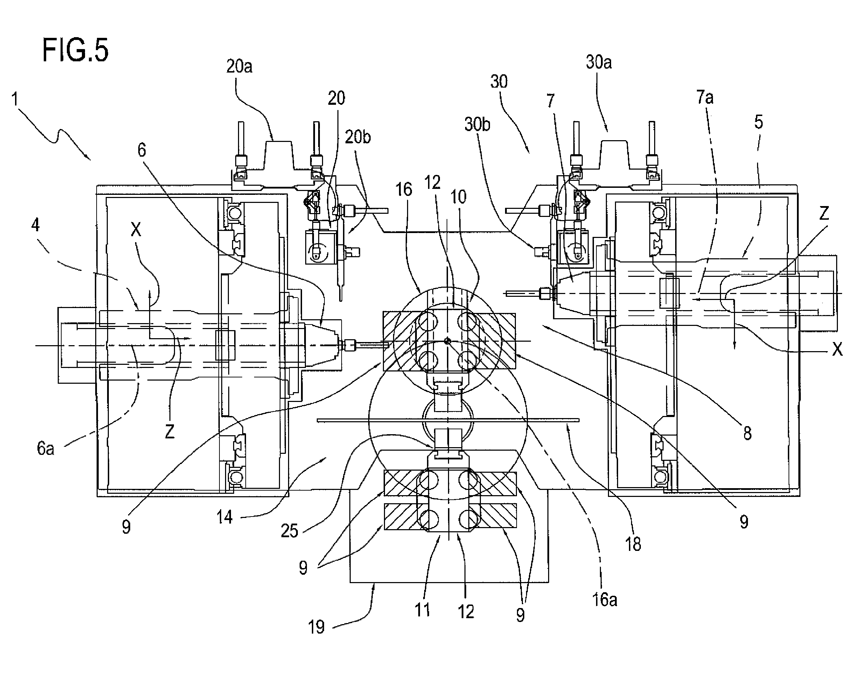

In use, according to the machine configuration illustrated in Figure 5, the tooling columns 10, 11 have opposite faces with the workpieces 9 positioned differently and non-symmetrically. In this way, the two machining units 2, 3, with their respective spindles 6, 7, perform a different machining operation on each face. The advantage of a working configuration of this kind is that the machine 1 can be equipped with two different machining units 2, 3 to perform even totally different operations in a single machine tool.

Figure 5 illustrates a machine configuration where the tooling columns 10, 11, with the workpieces 9 mounted on them, have symmetrical opposite faces; each of the two faces mounts one or more workpieces 9, equal in number and positioned in exactly the same way.

Each of the two opposite faces is machined by an individual machining unit 2, 3 so that the two machining units 2, 3 simultaneously perform identical, operations during the entire process on the workpiece.

In use, according to a machine configuration that is not illustrated, with workpiece mounting equipment like that illustrated in Figure 4, as described above, without tooling columns, fastening equipment 13 locks a respective workpiece 9 in such a way that the workpiece 9 can be machined by both the units 2, 3, even simultaneously.

This machine configuration makes it possible to process workpieces 9 that require machining at points that may be very far apart.

In use, with reference to Figure 2, the tooling column 10 is located inside the machining area 8, while the column 11 is located at the loading/unloading station 19.

Rotating the turntable 16 about its axis 16a enables the two spindles 6, 7 to machine a plurality of faces of each workpiece 9.

Once the spindles 6, 7 of the units 2, 3 have completed the necessary machining operations, the central rotary column 15 rises along its axis 15a until it engages its pallet 12 gripping means 25, thus simultaneously disengaging the pallets 12 from the internal turntable 16 and from the external bed 17.

At this point, movement means that are not illustrated lift the mobile panel 18 and the central rotary column 15 turns through 180 sexagesimal degrees about its axis 15a, thereby inverting the respective positions of the pallets 12. As a result, the pallet 12 with the machined workpieces 9 is located at the loading/unloading station 19 while the pallet 12 that mounts the workpieces 9 that still have to be machined is located inside the machining area 8.

A computerized control unit, not illustrated, controls all the operations performed by the machine 1.

Advantageously, the invention achieves the above mentioned aim of increasing the productivity of the machine tool compared to prior art single-spindle and twin-spindle machining centres, without increasing the number of clamps used to hold the workpieces and without losing the possibility of precisely controlling the movement of each working spindle.

The invention described can be modified and adapted in several ways without thereby departing from the scope of the inventive concept. Moreover, all the details of the invention may be substituted by technically equivalent elements.

## Claims

1. A machine tool comprising:
- means for mounting workpieces (9), said mounting means comprising a turntable (16) having a vertical axis (16a);
- two machining units (2, 3), each machining unit comprising a respective tool holder spindle (6, 7) that is mobile in space along three axes (X, Y, Z) at right angles to each other, said spindles (6, 7) moving independently of each other and being positioned on opposite sides of the turntable (16).

2. The machine according to claim 1, **characterized in that** the tool holder spindles (6, 7) comprise respective axes of rotation (6a, 7a) designed to be positioned coaxially with each other.

3. The machine according to claim 1 or 2, **characterized in that** it comprises, for each of the spindles (6, 7), an automatic tool changing device (20, 30).

4. The machine according to claim 3, **characterized in that** each tool changing device (20, 30) comprises a separate magazine (20a, 30a) for storing and feeding the tools and an element (20b, 30b) for picking up and transferring the tools from the magazine (20a, 30a) to the respective spindle (2, 3).

5. The machine according to any of the foregoing claims from 1 to 4, **characterized in that** it comprises means for transferring the workpieces (9) from the turntable (16) to a loading/unloading station (19) and vice versa.

6. The machine according to claim 3, where the workpieces (9) are mounted on respective pallets (12), **characterized in that** the means for transferring the workpieces (9) comprise a rotary column (15) in turn comprising respective means (25) for gripping the pallets (12).

7. The machine according to claim 5 or 6, **characterized in that** it comprises a panel (18) designed to separate the machining area (8) from the loading/unloading station (19).
